# EUROPÄISCHE PATENTSCHRIFT

(11) **EP 3 419 938 B1**
(45) Veröffentlichungstag und Bekanntmachung des Hinweises auf die Patenterteilung: **25.03.2020**
(21) Anmeldenummer: 18720099.3
(22) Anmeldetag: 20.04.2018
(51) Int. Cl.: C03B 9/193

(54) **PRESSSTEMPELBAUGRUPPE FÜR EINE GLASFORMMASCHINE**
PRESS RAM MODULE FOR A GLASS FORMING MACHINE
MODULE DE POINÇON POUR UNE MACHINE À FORMER LE VERRE

(30) Priorität: 15.05.2017 DE 102017004627
(43) Veröffentlichungstag der Anmeldung: 02.01.2019
(73) Patentinhaber: Heye International GmbH, 31683 Obernkirchen (DE)
(72) Erfinder: FELGENHAUER, Benedikt, 32049 Herford (DE)
(74) Vertreter: Sobisch, Peter
(86) Internationale Anmeldenummer: PCT/EP2018/000215
(87) Internationale Veröffentlichungsnummer: WO 2018/210444

(56) Entgegenhaltungen:
- EP-A1- 1 525 166
- US-A1- 2014 109 618

## Beschreibung

Die Erfindung bezieht sich auf eine Pressstempelbaugruppe entsprechend dem Oberbegriff des Anspruchs 1.

Ein solcher Pressstempelmechanimus ist aus dem EP 1 525 166 B1 bekannt und besteht aus mehreren, an Kolbenstangen getragenen Pressstempeln, die sämtlich mittels jeweils einem Presstempelhalter auf einer gemeinsamen Traverse unter Zwischenanordnung jeweils eines durch eine Kolben-Zylinder-Einheit dargestellten druckuftbeaufschlagbaren Presskraftbegrenzers abgestützt sind. Die Pressstempel sind jeweils in einer Pressstempelaufnahme mittels eines längsgeteilten Splitringes gehalten, wobei durch die Pressstempelhalter Stützzylinder zentriert werden, an denen der Splitring radial abgestützt ist und die ihrerseits an einem ersten Gehäuse befestigt sind. Die Traverse ist innerhalb des ersten Gehäuses auf einer zentral sowie nicht drehbar angeordneten Gewindespindel gehalten, die mit einer, durch einen ersten Antrieb antreibbaren Spindelmutter im Eingriff steht und relativ zu dem ersten Gehäuse zwecks Darstellung einer unteren Ruhestellung, einer mittleren Ladestellung sowie einer oberen Pressstellung des Pressstempels antreibbar ist.

Der Traverse sind seitliche Führungsstangen zugeordnet, die gleichermaßen wie die zentrale Gewindespindel die sich aus dem Pressvorgang ergebenden Reaktionskräfte in der Form von Biegemomenten aufnehmen. Gleiches gilt für die von dem ersten Antrieb zum Vorschub der Gewindespindel in diese eingeleiteten Kräfte. Dieser erste Antrieb steht mit der Spindelmutter über ein Winkelgetriebe in Verbindung.

Das erste Gehäuse ist innerhalb eines zweiten, dieses umgebenden, maschinenfest angeordneten Gehäuses mittels eines zweiten Antriebs zwecks Anpassung an unterschiedliche Höhenmaße der herzustellenden Hohlglasartikel verschiebbar angeordnet. Die Traverse bildet hierbei zusammen mit den Pressstempelhaltern und den Presskraftbegrenzern eine Einheit. Zur Erfassung einer zu großen oder zu kleinen Masse eines zu formenden Glastropfens sind Weggeber an dem ersten Gehäuse einerseits und an solchen Teilen andererseits angebracht, die mit der genannten Kolbenstange bewegt werden. Mit diesen lassen sich jedoch nur Lageveränderungen der Kolbenstange relativ zu dem ersten Gehäuse feststellen.

Zur Höhenverstellung des gesamten Pressstempelmechanismus ist ein mit einem Außengewinde versehener Rohrzylinder vorgesehen, der über ein Zahnradgetriebe antreibbar ist.

Zur Versorgung der Pressstempel mit Kühlluft sowie der Presskraftbegrenzer mit Druckluft sind am Boden des zweiten Gehäuses Versorgungsrohre angebracht, die bodenseitig in einem Anschlussblock enden und die über teleskopierbare Zwischenrohre mit der Traverse in Verbindung stehen, über welche die Weiterleitung zu den Pressstempeln sowie den Presskraftbegrenzern erfolgt.

Es ist vor diesem Hintergrund die Aufgabe der Erfindung, eine Pressstempelbaugruppe der eingangs bezeichneten Art in einfacher Weise mit Hinblick auf einen beanspruchungsgerechteren Kraftfluß sowie eine verbesserte Erfassung von Bewegungen im Rahmen des Formgebungsprozesses auszugestalten. Gelöst ist diese Aufgabe bei einer solchen Pressstempelbaugruppe durch die Merkmale des Kennzeichnungsteils des Anspruchs 1.

Erfindungswesentlich ist hiernach, dass die Presskraftbegrenzer in einer Baugruppe zusammengefasst sind, die als Baugruppe einheitlich vertikal und unverdrehbar entlang von Führungssäulen beweglich angeordnet ist. Zur Generierung der für den Formgebungsvorgang erforderlichen Presskraft ist ein Antrieb vorgesehen, der mit einer axial unverschiebbar innerhalb des Gehäuses gelagerten Antriebsspindel gekuppelt ist, welche ihrerseits mit einer in einem Spindelmuttergehäuse gelagerten Spindelmutter im Eingriff steht. Das Spindelmuttergehäuse ist über seitliche Führungen, insbesondere Linearführungen parallel zu den Führungssäulen innerhalb des Gehäuses beweglich angeordnet, wobei die Verbindung zwischen dem Spindelmuttergehäuse und der genannten Baugruppe mit der Maßgabe eingerichtet ist, dass lediglich Presskräfte, somit in Pressrichtung wirksame Kräfte, nicht hingegen Querkräfte senkrecht zu der Antriebsspindel bzw. Biegemomente oder sonstige, aus dem Formgebungsvorgang resultierende Reaktionskräfte und -momente übertragen werden. Derartige Reaktionskräfte entstehen beispielsweise als Folge einer ungleichförmigen Masseverteilung oder auch einer ungleichförmigen Temperaturverteilung der wenigstens zwei Formen sowie der in diese eingebrachten schmelzflüssigen Glasmassen, so dass der Pressvorgang mit dementsprechend unterschiedlichen über die Pressstempel aufzubringenden Presskräften einhergeht. Infolge der unverdrehbaren Führung sowohl der genannten Baugruppe als auch des Spindelmuttergehäuses können derartige Reaktionskräfte in zuverlässiger Weise auf das Gehäuse abgeleitete werden, so dass jedenfalls unabhängig von der Verteilung der Presskräfte auf unterschiedliche Pressstempel ein querkraftfreier Betrieb der Antriebsspindel gesichert ist.

Die Antriebsspindel ist entsprechend den Merkmalen des Anspruchs 2 axial unverschiebbar an Strukturelementen des Gehäuses gelagert. Hierzu bieten sich dessen Boden sowie Zwischenböden an. Dementsprechend ist entlang der Antriebsspindel eine Spindelmutter axial beweglich angeordnet und es wird erfindungsgemäß die dementsprechende Bewegung eines Spindelmuttergehäuses zur Übertragung von Presskräften eingesetzt.

Die genannten Führungssäulen sind entsprechend den Merkmalen des Anspruchs 3 gehäusefest angeordnet. Entlang dieser ist u. a. die genannte, die Presskraftbegrenzer aufnehmende Baugruppe verschiebbar und es sind diese dazu eingerichtet, neben einer Führung der Baugruppe eventuell auftretende Querkräfte auf das Gehäuse abzuleiten.

Die Verbindung zwischen der die Presskraftbegrenzer aufnehmenden Baugruppe und dem Spindelmuttergehäuse ist entsprechend den Merkmalen des Anspruchs 4 dahingehend eingerichtet, dass eine querkraftfreie Verschiebung der Baugruppe und des Spindelmuttergehäuses gegeben ist.

Entsprechend den Merkmalen des Anspruchs 5 ist der zur Aufbringung der Presskraft bestimmte Antrieb an dem Gehäuse angeordnet. In Abweichung von dem eingangs vorgestellten Stand der Technik existiert somit kein nach Maßgabe des Pressvorgangs beweglich angeordneter Antrieb.

Ein Getriebe, insbesondere ein Winkelgetriebe entsprechend den Merkmalen des Anspruchs 6 als Kupplungsorgan zwischen dem genannten Antrieb und der Antriebsspindel ist vorteilhaft, jedoch nicht unbedingt notwendig, so dass eine direkte Anbindung des Antriebs an die Antriebspindel möglich ist.

Entsprechend den Merkmalen des Anspruchs 7 sind die zur Führung der Pressstempel bestimmten Laufbuchsen auf einer Grundplatte befestigt, deren Höhenlage zur Anpassung an unterschiedliche Maße der herzustellenden Hohlglasartikel, insbesondere deren Höhenmaße relativ zu dem Gehäuse verstellbar angeordnet ist. In Abweichung von dem eingangs vorgestellten Stand der Technik besteht somit keine Verbindung zwischen den Laufbuchsen und dem Gehäuse.

Die Merkmale der Ansprüche 8 bis 10 sind auf eine mögliche Ausgestaltung eines Antriebs zur Höhenverstellung der Grundplatte gerichtet. Der Antrieb ist an dem Gehäuse befestigt und steht über zwei Spindelhubgetriebe und zwei zueinander parallele Spindeln mit der Grundplatte in Verbindung. Beide Spindelhubgetriebe sind über eine Kupplungswelle verbunden. Die Grundplatte erfährt durch die genannten Führungssäulen eine stabile Führung.

Entsprechend den Merkmalen des Anspruchs 11 sind die Presskraftbegrenzer durch doppelt wirkende Zylinder gekennzeichnet, deren Wirkflächen als Ringkolben ausgestaltet sind, wobei die unten liegenden Zylinderräume zur Übertragung von Presskräften mit den Pressstempeln in Verbindung stehen.

Die genannten Zylinder sind entsprechend den Merkmalen des Anspruchs 12 gleichzeitig zur Führung von Kühlluft zu den Pressstempeln eingerichtet.

Verbrauchte Kühlluft strömt entsprechend den Merkmalen des Anspruchs 13 als Abluft von den Pressstempeln in einen an der Grundplatte befestigten Abluftblock und kann von diesem aus über ein als Sammelleitung fungierendes Abluftrohr abgeführt werden.

Entsprechend den Merkmalen der Ansprüche 14 und 15 ist jeder Pressstempel zur Wegerfassung mit beispielsweise magnetischen Messelement versehen, welches berührungslos jeweils mit einem gehäusefest angebrachten Wegmesssystem in Wirkverbindung steht. Auf diese Weise ist der Weg eines jeden Pressstempels individuell erfassbar und kann als elektrisches, insbesondere digitales Signal abgebildet werden. Dies eröffnet vielfältige weitergehendere Auswertungsmöglichkeiten, wobei beispielweise eine Pressfunktion ermittelt werden kann. Darüber hinaus kann dieses Messsystem zur Höheneinstellung der Laufbuchsen gegenüber einem definierten Niveau benutzt werden.

Entsprechend den Merkmalen des Anspruchs 16 ist eine zumindest die Presstempel umfassende Baueinheit innerhalb des Gehäuses in einer Horizontalebene verstellbar angeordnet, wobei den Verstellbewegungen jeweils Antriebe zugeordnet sind. Im einfachsten Fall kann es sich bei diesen Verstellbewegungen um zwei zueinander senkrechte Teilbewegungen handeln. Auf diese Weise ist eine genaue Einstellmöglichkeit der Lage und damit des Wirkungsortes der Presstempel darstellbar.Ein Antrieb kann an dieser Stelle durch jedes dem Fachmann bekannte System gebildet werden.

Entsprechend den Merkmalen der Ansprüche 17 und 18 sind die Antriebe an dem Gehäuse angeordnet und stehen mit der genannten Baueinheit über eine Spindel in Wirkverbindung. Die Spindel ist zweckmäßigerweise auf der Außenseite des Gehäuses leicht zugänglich angeordnet.

Die Einstellposition der Baueinheit in der genannten Horizontalebene ist entsprechend den Merkmalen des Anspruchs 19 fixierbar. Hierzu können beliebige dem Fachmann geläufige, beispielsweise auf einer Verschraubung beruhende Befestigungselemente eingesetzt werden.

Die Verschiebewege der Baueinheit in der genannten Horizontalebene sind entsprechend den Merkmalen des Anspruchs 20 durch Anschlagkanten oder dergleichen Funktionselemente begrenzt.

Die Erfindung wird im Folgenden unter Bezugnahme auf die beiliegenden Zeichnungen näher erläutert werden. Es zeigen:
- Fig. 1: eine perspektivische offene vorderseitige Darstellung einer Pressstempelbaugruppe;
- Fig. 2: eine Darstellung einer ebenen vorderseitigen Ansicht der Pressstempelbaugruppe gemäß Fig. 1;
- Fig. 3: eine Schnittdarstellung der Pressstempelbaugruppe in einer Ebene III - III der Fig. 2;
- Fig. 4: eine perspektivische geschlossene rückseitige Darstellung einer Pressstempelbaugruppe;
- Fig. 5: eine vergrößerte Darstellung einer Einzelheit V der Fig. 4;
- Fig. 6: eine vergrößerte Darstellung einer Einzelheit VI der Fig. 4;
- Fig. 7: eine ebene Darstellung der Pressstempelbaugruppe entsprechend einer Blickrichtung VII der Fig. 4;
- Fig. 8: eine vergrößerte Darstellung einer Einzelheit VIII der Fig. 7;
- Fig. 9: eine ebene Schnittdarstellung eines Verstellantriebs der Pressstempelbau-Gruppe;

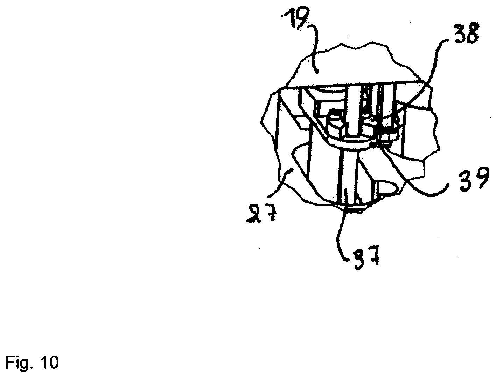

- Fig. 10: eine vergrößerte perspektivische Darstellung einer Einzelheit X der Fig. 1;

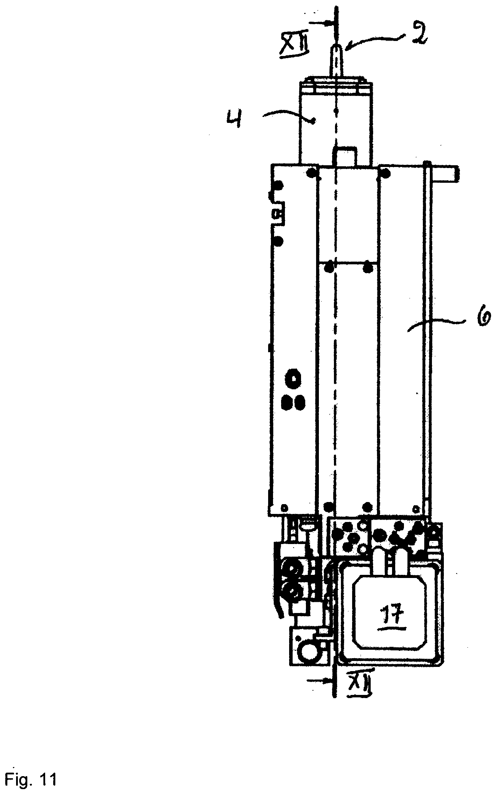

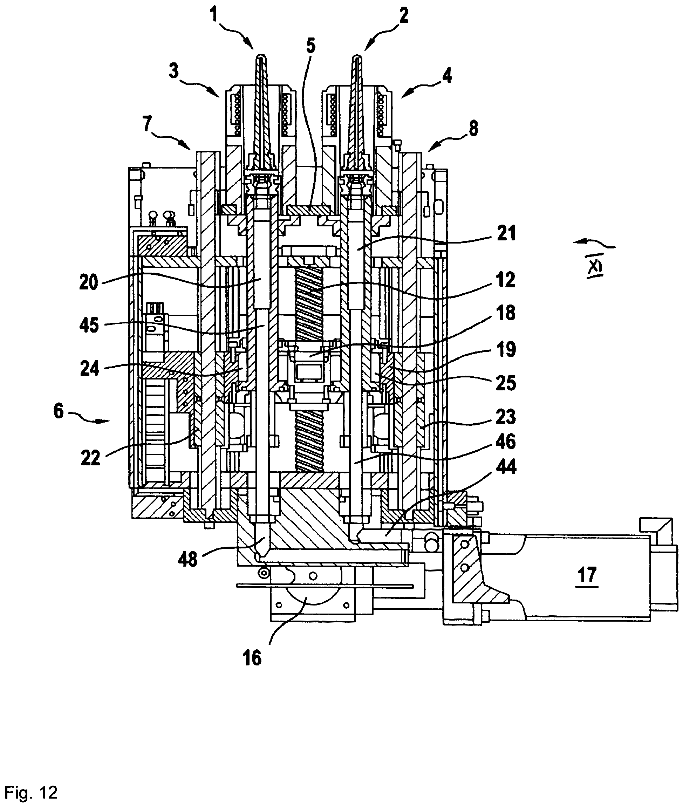

- Fig. 11: eine Darstellung einer ebenen Ansicht der Pressstempelbaugruppe entsprechend einer Blickrichtung XI der Fig. 12;
- Fig. 12: eine Schnittdarstellung der Pressstempelbaugruppe entsprechend einer Ebene XII - XII der Fig. 11;

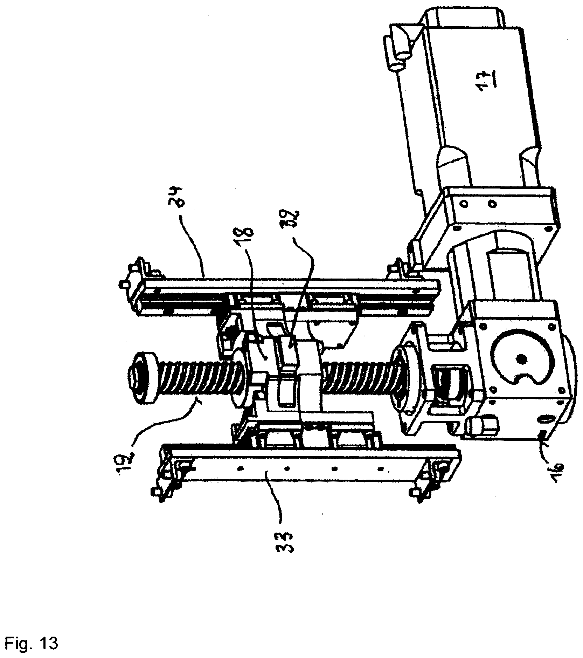

- Fig. 13: eine vergrößerte perspektivische Teildarstellung eines Pressstempelantriebs;

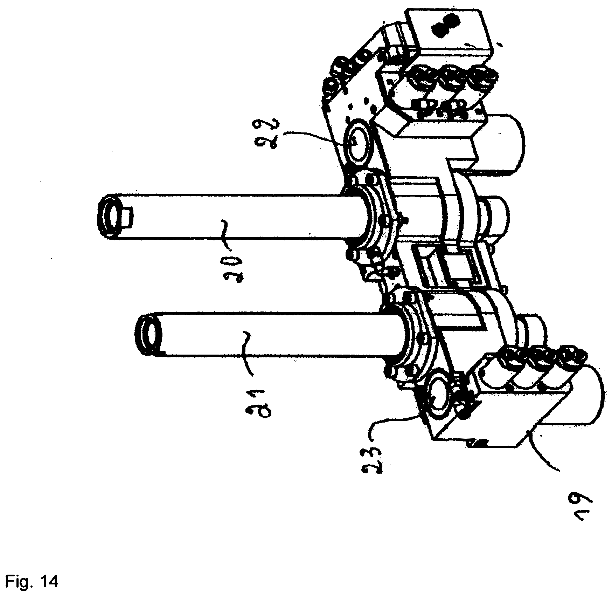

- Fig. 14: eine vergrößerte perspektivische Teildarstellung einer vorderseitigen Ansicht einer zur Presskraftübertragung bestimmten Baugruppe;

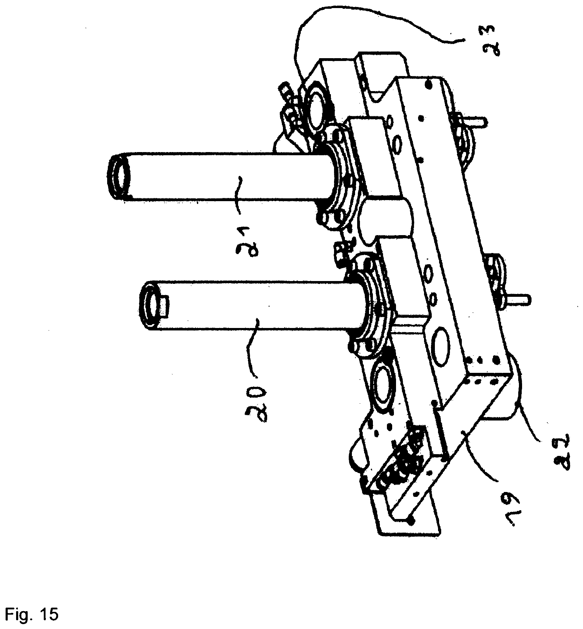

- Fig. 15: eine vergrößerte perspektivische Teildarstellung einer rückseitigen Ansicht der Baugruppe entsprechend Fig. 14;

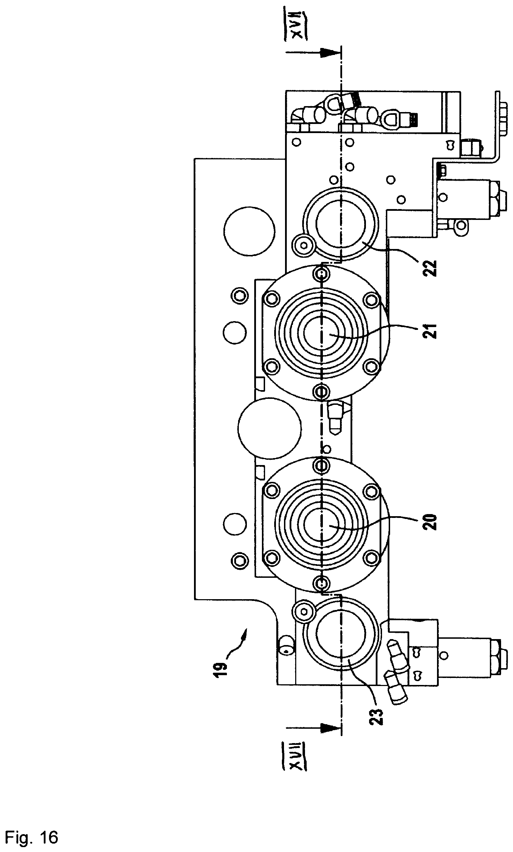

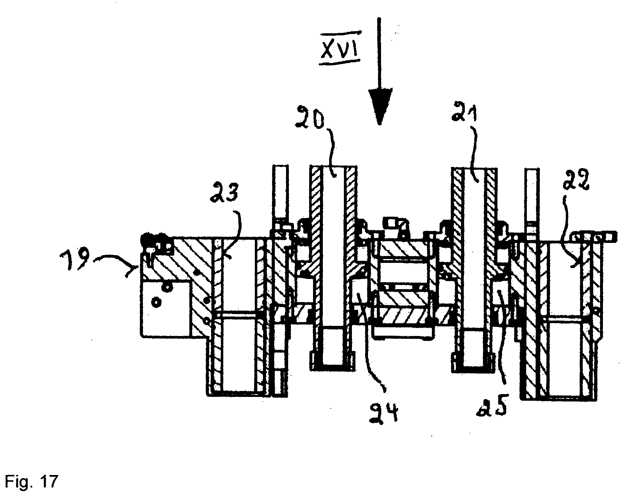

- Fig. 16: eine ebene Darstelling einer Draufsicht auf die Baugruppe entsprechend einer Blickrichtung XVI der Fig. 17;
- Fig. 17: eine Schnittdarstellung der Baugruppe entsprechend einer Ebene XVII - XVII der Fig. 16;

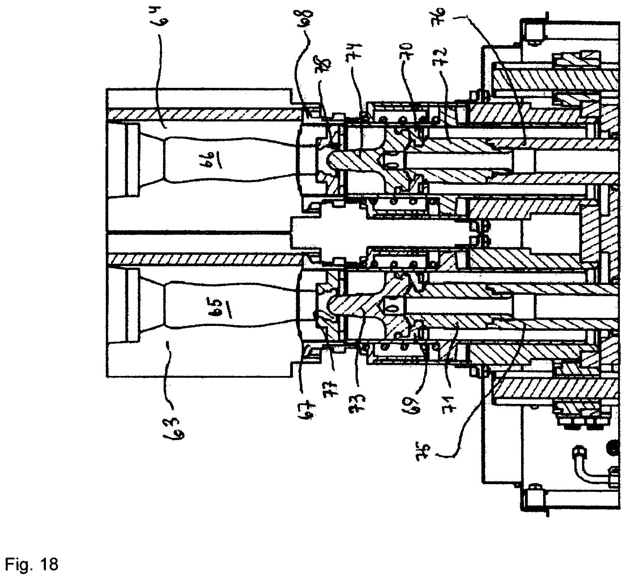

- Fig. 18: eine Darstellung einer mit Hinblick auf eine Anwendung für ein Blas-Blas-Verfahren eingerichteten Pressmechanismus in der Blasstellung;
- Fig. 19: eine Darstellung des Pressmechanismus gemäß Fig. 18 in der Niederblasstellung.

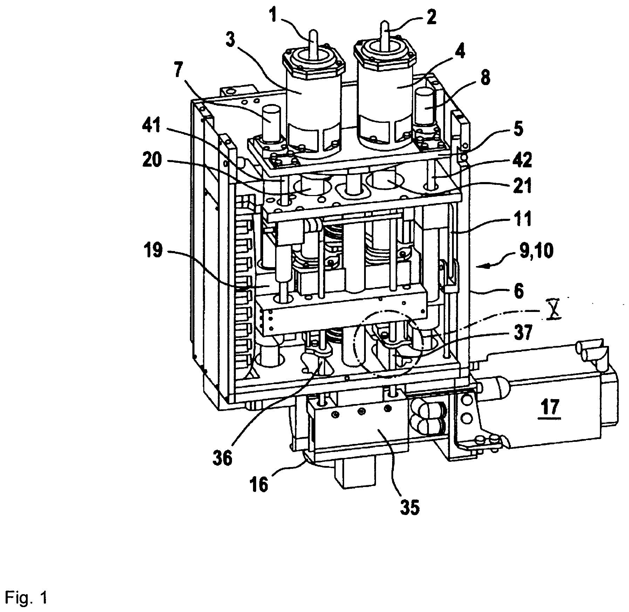

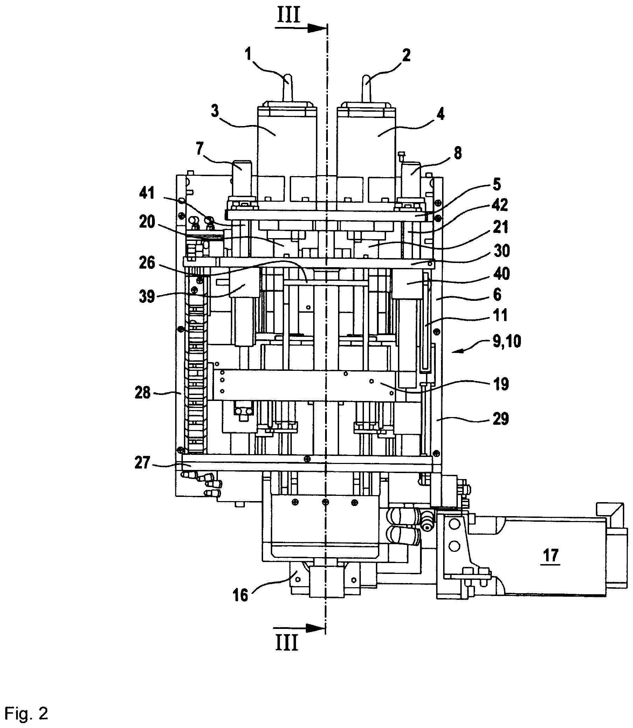

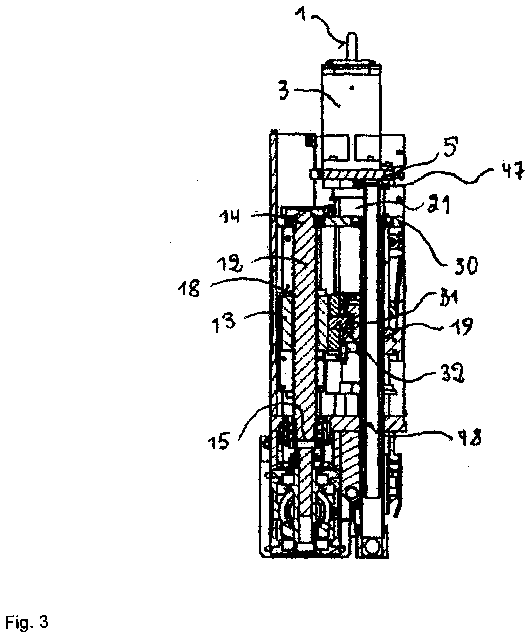

Es wird zunächst auf die Darstellungen gemäß den Figuren 1 bis 3 Bezug genommen. Diese zeigen eine für einen Doppeltropfenbetrieb bestimmte Pressstempelbaugruppe, deren Pressstempel 1, 2 in jeweils einer Laufbuchse 3, 4 axial geführt und zentriert sind.

Beide Laufbuchsen 3, 4 sind auf einer Grundplatte 5 befestigt, die ihrerseits gegenüber einem Gehäuse 6 zwecks Anpassung an unterschiedliche Abmessungen der zu behandelnden Hohlglasartikel entlang zweier Führungssäulen 7, 8 höhenverstellbar angeordnet ist. Ein Antrieb 9 für die Höhenverstellung befindet sich an der Stelle 10 und steht über ein Zugmittelgetriebe 11 mit einer sich horizontal erstreckenden Kupplungswelle in Verbindung, über welche die Drehbewegung des Antriebs 9 mittels zweier endseitiger Spindelhubgetriebe 39, 40 sowie nicht drehender Spindeln 41, 42 als Hubbewegung auf die Grundplatte 5 übertragen wird.

Das Gehäuse 6 besteht im wesentlichen aus einer Bodenplatte 27, Seitenwandungen 28, 29 und einem Zwischenboden 30 und ist zur Montage an einem Maschinenrahmen einer I.S. Glasformmaschine bestimmt und eingerichtet.

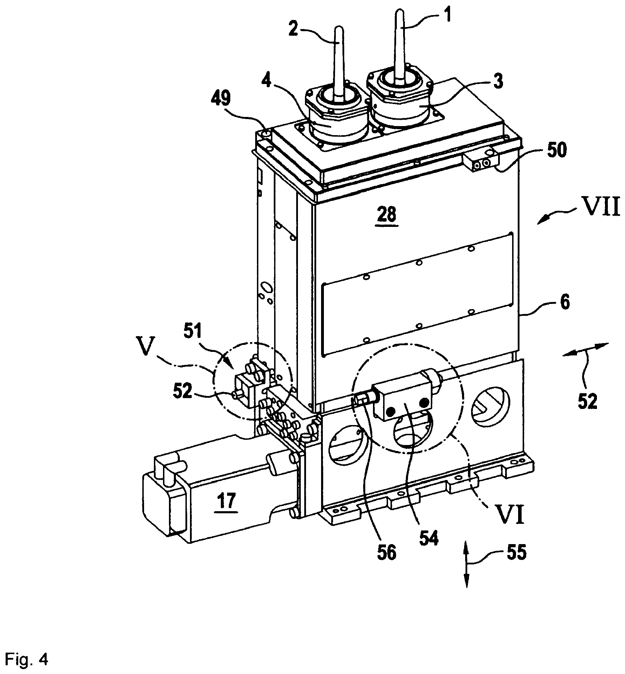

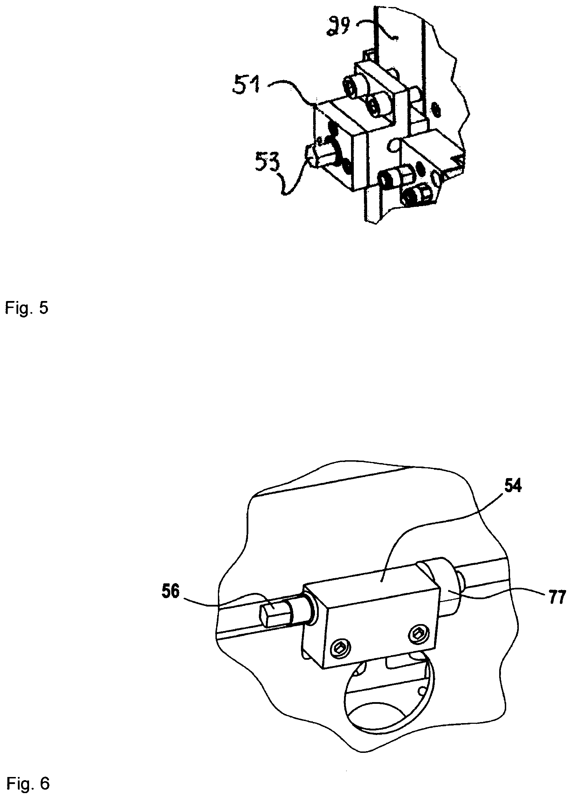

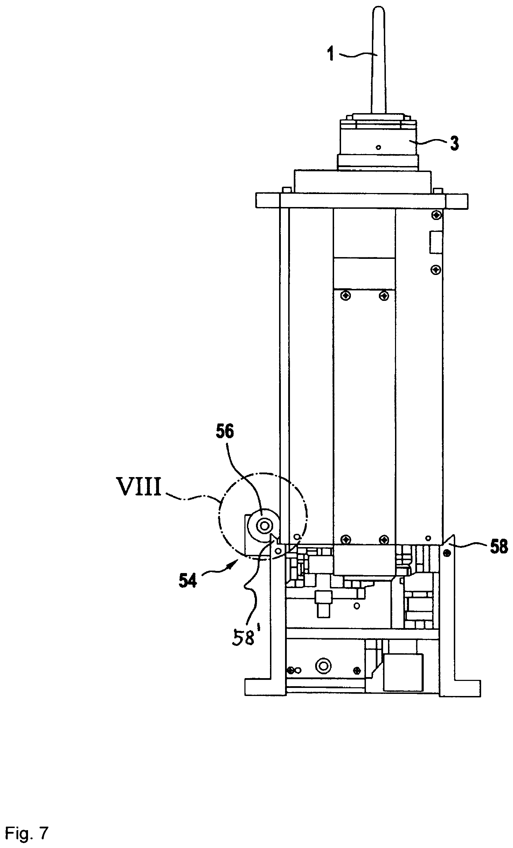

Zur Erläuterung der horizontalen Positionierung der auf der Grundplatte 5 angeordneten, gegenüber dem Gehäuse 6 vertikal beweglichen Komponenten der Pressstempelbaugruppe wird im Folgenden ergänzend auf die Figuren 4 bis 8 Bezug genommen.

Mit 49, 50 sind am oberen Bereich des Gehäuses 6 angebrachte Fixierpunkte bezeichnet, die dazu bestimmt und eingerichtet sind, nach erfolgter horizontaler Justierung der Position der Presstempelbaugruppe eine Verschraubung derselben mit dem Gehäuse 6 zu ermöglichen. Die Presstempelbauguppe ist somit gegenüber dem Gehäuse 6 in einer Horizontalebene einstellbar angeordnet und kann in den jeweils eingestellten Positionen fixiert werden.

Mit 51 ist eine, zur Verstellung in den Richtungen 52, somit in Längsrichtung des Gehäuses 6 eingerichtete Positioniereinheit bezeichnet, die an dem Gehäuse 6 angeordnet ist. Die Antriebsverbindung zu der Presstempelbaugruppe ist durch eine Spindel 53 dagestellt und wird im Folgenden noch näher erläutert werden.

Mit 54 ist eine, zur Verstellung in den Richtungen 55, somit in Querrichtung des Gehäuses 6 senkrecht zu den Richtungen 52 eingerichtete weitere Positioniereinheit bezeichnet, die ebenfalls an dem Gehäuse 6 angeordnet ist. Die Antriebsverbindung zu der Pressstempelbaugruppe ist wiederum durch eine Spindel 56 dargestellt und wird im Folgenden noch näher erläutert werden.

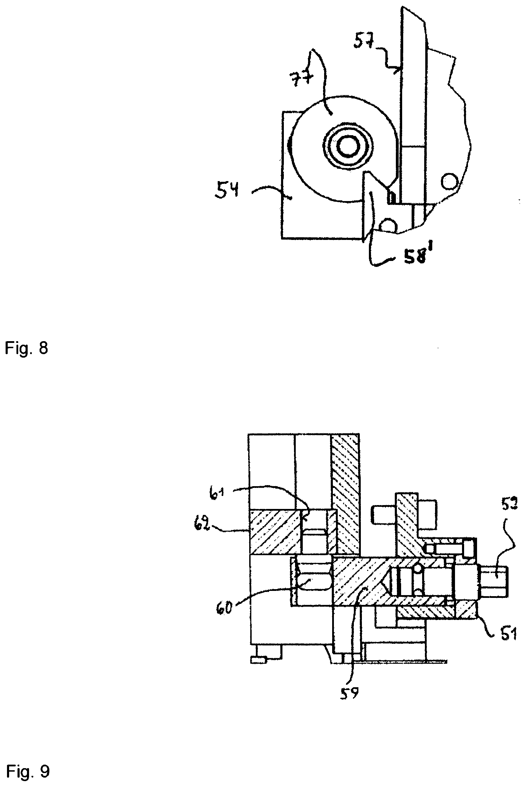

Die Positioniereinheit 54 ist mit einem Exzenter 77 ausgerüstet (Fig. 8), der mit einer Gegenfläche 57 der Pressstempelbaugruppe in Wirkverbindung steht, diese nach Maßgabe seiner Drehwinkelstellung in der einen der beiden Richtungen 55 bewegend. Eine Bewegung in Gegenrichtung kann in gleicher Weise dargestellt werden oder in einer sonstigen, dem Fachmann geläufigen Weise. Mit 58, 58' sind maschinenfeste Anschlagkanten bezeichnet, welche die Bewegung der Pressstempelbaugruppe in den Richtungen 55 begrenzen.

Die Positioniereinheit 51 ist an dem Gehäuse 6 befestigt und es steht deren Spindel 52 mit einer Schubstange 59 in Wirkverbindung, wobei ein Eingriff der Spindel 52 und der Schubstange 59 beispielsweise nach Art des Funktionsprinzips einer Kugelumlaufspindel eingerichtet sein kann, hierbei eine Linearbewegung der Schubstange nach Maßgabe der Drehung der Spindel generierend. Andere Konstruktionsformen zur Darstellung einer Linearbewegung der Schubstange werden jedoch nicht ausgeschlossen.

Die Schubstange 59 ist über einen Mitnahmebolzen 60, der in eine Bohrung 61 eines mit der Presstempelbaugruppe in fester Verbindung stehenden Bauteils 62 eingreift, zur Ausübung einer Vorschubbewegung in den Richtungen 52 eingerichtet.

Eine Justierung der Position der Pressstemelbaugruppe in einer Horizontalebene ist somit nach Lösen der Verschraubungen an den Fixierpunkten 49, 50 unter Mitwirkung der Positioniereinheiten 51, 54 möglich. Durch erneutes Anziehen der Verschraubungen an den Fixierpunkten ist die Position der Pressstempeleinheit gesichert.

Mit 12 ist eine um eine vertikale Achse drehbar gelagerte Antriebsspindel bezeichnet, die mit einer Spindelmutter 13 im Eingriff steht. Die Antriebsspindel 12 ist an ihrem oberen Ende 14 in dem Zwischenboden 30 sowie im Bereich ihres unteren Endes 15 in der Bodenplatte 27 axial unverschiebbar gelagert und steht über ein Winkelgetriebe 16 mit einem an dem Gehäuse 6 angeordneten Antrieb 17 in Verbindung. Sowohl das Winkelgetriebe 16 als auch der Antrieb sind unterhalb der Bodenplatte 27 angeordnet.

Die Spindelmutter 13 ist drehfest in einem Spindelmuttergehäuse 18 aufgenommen, welches seinerseits mit einer Baugruppe 19 in Verbindung steht, in welcher zueinander parallel und vertikal angeordnete Zylinder 20, 21 aufgenommen sind. Die Zylinder 20, 21 stehen mit den Pressstempeln 1, 2 in Antriebsverbindung und dienen der Übertragung der Presskraft sowie zur Aufnahme der noch zu beschreibenden Presskraftbegrenzer. Hierzu wird im Folgenden ergänzend auf die Zeichnungsfiguren 5 bis 11 Bezug genommen, in denen Funktionselemente, die mit denjenigen der Figuren 1 bis 4 übereinstimmen, entsprechend beziffert sind, so dass auf eine diesbezügliche wiederholte Beschreibung verzichtet werden kann.

Die Verbindung zwischen der Baugruppe 19 und dem Spindelmuttergehäuse 18 ist durch einen, an dem Spindelmuttergehäuse 18 gehaltenen und mit einer Ausnehmung 31 der Baugruppe 19 im Eingriff stehenden Mitnehmerzapfen 32 dargestellt, über welchen somit die für den Formgebungsprozess benötigte Presskraft übertragen wird.

Die Zylinder 20, 21 sind axial über als Presskraftbegrenzer 24, 25 fungierende Kolben-Zylinder-Einheiten auf der Baugruppe 19 abgestützt, welche unter Zwischenanordnung von Führungsmuffen 22, 23 entlang der Führungssäulen 7, 8 unverdrehbar beweglich angeordnet ist. Auf diese Weise werden aus dem Formgebungsvorgang resultierende und auf die Baugruppe 19 rückwirkende Kräfte auf diese Führungssäulen 7, 8 übertragen und damit auf das Gehäuse 6 abgeleitet.

Mit 33, 34 sind Linearführungen bezeichnet, die innenseitig in dem Gehäuse 6 befestigt sind und mit entsprechenden Gegenelementen des Spindelmuttergehäuses 18 im Eingriff stehen. Auf diese Weise ergibt sich eine zumindest im wesentlichen momentenfreie Führung des Spindelmuttergehäuses 18, da Querkräfte, die aus dem Formgebungsprozess entstehen, über die Linearführungen 33, 34 auf das Gehäuse 6 übertragen werden.

Mit 35 ist eine an dem Gehäuse 6 befestigte Halterung für eine Wegmesseinrichtung bezeichnet, welche zur Fixierung von jeweils den Pressstempeln 1, 2 zugeordneten, somit jeweils gehäusefest angeordneten Wegmessystemen 36, 37 eingerichtet ist, die zum berührungslosen Zusammenwirken mit beweglich angeordneten Messelementen 38 bestimmt sind. Die Messelemente 38 stehen mit den Pressstempeln 1, 2 in Verbindung. Vorzugsweise handelt es sich bei den Wegmesssystemen 36, 37 um magnetostriktiv wirkende Systeme und bei den Messelementen 38 um dementsprechend um Magnete. Das somit bewegliche Messelement 38 ist auf einem Halter 39 angeordnet, der seinerseits mit dem zugekehrten Ende des Zylinders 20, 21 in Verbindung steht, beispielsweise mit diesem verschraubt ist. Andere, dem Fachmann bekannte und auf anderen physikalischen Wirkungsprinzipien beruhende berührungslose Messysteme werden an dieser Stelle jedoch nicht ausgeschlossen.

Mit 43, 44 sind Zuluftleitungen für Kühlluft bezeichnet, die über unterseitig in die Zylinder 20, 21 hineinragende Rohrelemente 45, 46 eingeführt werden und in an sich bekannter Weise eine Kühlwirkung im Bereich der Pressstempel 1, 2 entwickeln. Die verbrauchte Kühlluft der beiden Presstempel 1, 2 wird in einem Abluftblock 47 unmittelbar unterhalb der Grundplatte 5 gesammelt und über ein Abluftrohr 48 abgeführt.

Man erkennt, dass die für den Formgebungsprozess erforderliche Presskraft über den Antrieb 17, das Winkelgetriebe 16, die Antriebsspindel 12, das Spindelmuttergehäuse 18 sowie die Baugruppe 19 auf die Pressstempel 1, 2 übertragen wird, dass jedoch zwischen den Presstempeln 1, 2 aufgrund der Presskraftbegrenzer 24, 25 Relativbewegungen möglich sind.

Das Funktionsprinzip derartiger Presskraftbegrenzer ist bekannt und beruhzt auf einem mittels Druckluft aufgebauten Gegendruck. Auf Detaildarstellungen einer Druckluftversorgung ist an dieser Stelle daher verzichtet worden.

Man erkennt ferner, dass weder die Laufbuchsen 3, 4 noch die Presskraftbegrenzer mit der Antriebsspindel 12 unmittelbar in Verbindung stehen. In Abweichung von dem eingangs vorgestellten Stand der Technik existiert auch keine Traverse, die mit den Laufbuchsen eine bauliche Einheit bildet.

Man erkennt schließlich, dass ebenfalls in Abweichung von dem eingangs vorgestellten Stand der Technik weder das Winkelgetriebe 16 noch der diesem zugeordnete Antrieb 17 an einem verschiebbaren Gehäuse oder einer sonstigen verschiebbaren Baugruppe befestigt sind. Verschiebbar im Rahmen des Formgebungsprozesses gegenüber dem Gehäuse 6 ist somit lediglich eine aus dem Spindelmuttergehäuse 18, der Baugruppe 19 und den über die Presskraftbegrenzer 24, 25 auf letzterer abgestützten Pressstempel 1, 2 bestehende Baueinheit.

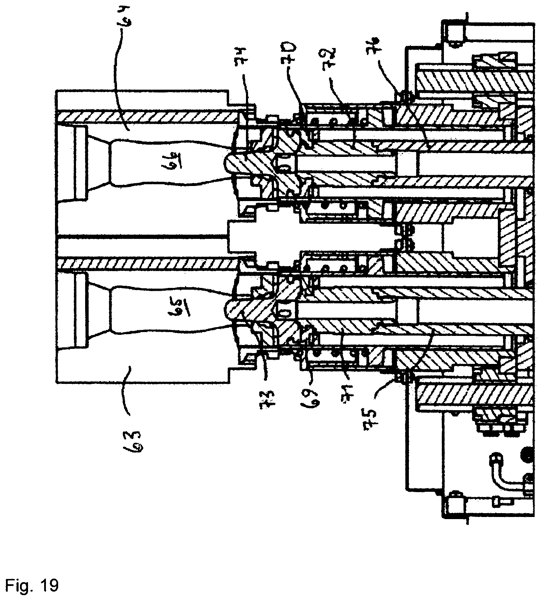

Vorstehend wurde ein auf das Press-Blas-Verfahren hin eingerichteter Pressmechanismus beschrieben. Die Erfindung kann jedoch gleichermaßen auch für ein Blas-Blas-Verfahren benutzt werden. Hierzu wird auf Fig. 19 Bezug genommen.

Diese zeigt exemplarisch zwei jeweils aus Formhälften zusammengesetzte Vorformen 63, 64 in der Schließstellung, die jeweils einen Formgebungsraum 65, 66 umschließen, der jeweils über einen Mündungsring 67, 68, sowie einen Splitring 69, 70 mit einem Kolbenstangenkopf 71, 72 formschlüssig in Verbindung stehen. Der Splitring 69, 70 ist in bekannter Weise längsgeteilt ausgebildet und dient der axialen Fixierung jeweils eines Stempels 73, 74, der sich gemäß der zeichnerischen Darstellung in der Blasstellung befindet.

Jeder der beiden hohl ausgebildeten Kolbenstangenköpfe 71, 72 steht in bekannter Weise mit einer ebenfalls hohl ausgebildeten Kolbenstange 75, 76 in Verbindung, so dass sich für die Blasluft in dieser Stellung des Stempels 73, 74 ausgehend von der Kolbenstange 75, 76 über den jeweiligen Kolbenstangenkopf 75, 76, zeichnerisch nicht dargestellte Bohrungen des Stempels 73, 74 und einen das formraumseitige Ende des Stempels umgebenden Ringspalt 77, 78 ein durchgängiger Strömungsweg in den jeweiligen Formgebungsraum 65, 66 ergibt. In dieser Stellung kann das Külbel ausgeblasen werden.

Zur Umrüstung von einem Press-Blas-Verfahren zu einem Blas-Blas-Verfahren und umgekehrt ist somit lediglich ein Austauschen des Stempels 73, 74 sowie des Kolbenstangenkopfes 71, 72 erforderlich.

Fig. 19 zeigt den Pressmechanismus in der Niederblasstellung, in der der Formgebungsraum 65, 66 unterseitig bzw. im Mündungsbereich des herzustellenden Hohlglasartikels durch den jeweiligen Stempel 73, 74 geschlossen ist und in der oberseitig ein Glastropfen eingeführt wird, der in der Folge durch das Niederblasen gegen den geschlossenen Boden des Formgebungsraumes 65, 66 gepresst wird.

**Bezugszeichenliste:**

| | | | |
|---|---|---|---|
| 1. | Pressstempel | 40. | Spindelhubgetriebe |
| 2. | Pressstempel | 41. | Spindel |
| 3. | Laufbuchse | 42. | Spindel |
| 4. | Laufbuchse | 43. | Zuluftleitung |
| 5. | Grundplatte | 44. | Zuluftleitung |
| 6. | Gehäuse | 45. | Rohrelement |
| 7. | Führungssäule | 46. | Rohrelement |
| 8. | Führungssäule | 47. | Abluftblock |
| 9. | Antrieb | 48. | Abluftrohr |
| 10. | Stelle | 49. | Fixierpunkt |
| 11. | Zugmittelgetriebe | 50. | Fixierpunkt |
| 12. | Antriebsspindel | 51. | Positioniereinheit |
| 13. | Spindelmutter | 52. | Richtungen |
| 14. | Ende, oberes | 53. | Spindel |
| 15. | Ende, unteres | 54. | Positioniereinheit |
| 16. | Winkelgetriebe | 55. | Richtungen |
| 17. | Antrieb | 56. | Spindel |
| 18. | Spindelmuttergehäuse | 57. | Gegenfläche |
| 19. | Baugruppe | 58. | Anschlagkante |
| 20. | Zylinder | 58'. | Anschlagkante |
| 21. | Zylinder | 59. | Schubstange |
| 22. | Führungsmuffe | 60. | Mitnahmebolzen |
| 23. | Führungsmuffe | 61. | Bohrung |
| 24. | Presskraftbegrenzer | 62. | Bauteil |
| 25. | Presskraftbegrenzer | 63. | Vorform |
| 26. | Kupplungswelle | 64. | Vorform |
| 27. | Bodenplatte | 65. | Formgebungsraum |
| 28. | Seitenwandung | 66. | Formgebungsraum |
| 29. | Seitenwandung | 67. | Mündungsring |
| 30. | Zwischenboden | 68. | Mündungsring |
| 31. | Ausnehmung | 69. | Splitring |
| 32. | Mitnehmerzapfen | 70. | Splitring |
| 33. | Linearführung | 71. | Kolbenstangenkopf |
| 34. | Linearführung | 72. | Kolbenstangenkopf |
| 35. | Halterung | 73. | Stempel |
| 36. | Wegmesssystem | 74. | Stempel |
| 37. | Wegmesssystem | 75. | Kolbenstange |
| 38. | Messelement | 76. | Kolbenstange |
| 39. | Spindelhubgetriebe | 77. | Exzenter |

## Patentansprüche

1. Pressstempelbaugruppe für eine I.S. Glasformmaschine mit einem Gehäuse (6), zumindest zwei zur Durchführung eines Formgebungsprozesses beweglich angeordneten Pressstempeln (1, 2), einem Antrieb (17), der mit einer Antriebsspindel (12) zur Generierung der auf die Presstempel (1, 2) zu übertragenden Presskraft in Wirkverbindung steht, und mit durch Kolben-ZylinderEinheiten dargestellten Presskraftbegrenzern (24, 25), **dadurch gekennzeichnet, dass** die Antriebsspindel (12) in dem Gehäuse (6) axial unverschiebbar und um ihre Achse drehbar gelagert ist, dass die Presskraftbegrenzer (24, 25) in einer Baugruppe (19) zusammengefasst sind, die entlang von Führungssäulen (7, 8) vertikal und unverdrehbar geführt ist, dass die Baugruppe (19) mit einem mit der Antriebsspindel (12) im Eingriff stehenden Spindelmuttergehäuse (18) zur Übertragung lediglich von Presskräften in Verbindung steht und dass das Spindelmuttergehäuse (18) über seitliche Linearführungen (33, 34) mit dem Gehäuse (6) in Verbindung steht, hierbei einen querkraftfreien Betrieb der Antriebsspindel (12) einrichtend.

2. Pressstempelmechanismus nach Anspruch 1, **dadurch gekennzeichnet, dass** die Antriebsspindel (12) an ihrem oberen Ende (14) in einem Zwischenboden (30) und an ihrem unteren Ende (15) in einer Bodenplatte (27) des Gehäuses (6) gelagert ist.

3. Pressstempelmechanismus nach Anspruch 1 oder 2, **dadurch gekennzeichnet, dass** die Führungssäulen (7, 8) gehäusefest angeordnet sind.

4. Pressstempelbaugruppe nach einem der Ansprüche 1 bis 3, **dadurch gekennzeichnet, dass** die Verbindung zwischen der Baugruppe (19) und dem Spindelmuttergehäuse (18) mit der Maßgabe eingerichtet ist, dass jegliche Reaktionskräfte aus dem Formgebungsvorgang mit Ausnahme der Presskraft auf die Führungssäulen (7, 8) sowie die Linearführungen (33, 34) übertragen werden.

5. Pressstempelbaugruppe nach einem der Ansprüche 1 bis 4, **dadurch gekennzeichnet, dass** der Antrieb (17) an dem Gehäuse (6) befestigt ist.

6. Presstempelbaugruppe nach Anspruch 5, **dadurch gekennzeichnet, dass** der Antrieb (17) über ein Getriebe, insbesondere ein Winkelgetriebe (16) mit der Antriebsspindel (12) in Verbindung steht.

7. Pressstempelbaugruppe nach einem der Ansprüche 1 bis 6, **dadurch gekennzeichnet, dass** die Presstempel (1, 2) in Laufbuchsen (3, 4) aufgenommen und zentriert sind, dass die Laufbuchsen (3, 4) auf einer Grundplatte (5) befestigt sind, und dass die Grundplatte (5) zwecks Anpassung an unterschiedliche Maße der zu formenden Hohlglasartikel relativ zu dem Gehäuse (6) höhenverstellbar angeordnet ist.

8. Presstempelbaugruppe nach Anspruch 7, **dadurch gekennzeichnet, dass** die Grundplatte (5) über wenigstens zwei zueinander parallele Spindeln (41, 42) mit einem für die Höheneinstellung eingerichteten Antrieb (9) in Verbindung steht.

9. Pressstempelbaugruppe nach Anspruch 8, **dadurch gekennzeichnet, dass** die beiden Spindeln (41, 42) über Spindelhubgetriebe (39, 40) und eine Kupplungswelle (26) mit dem Antrieb (9) in Verbindung stehen und dass der Antrieb (9) an dem Gehäuse (6) befestigt ist.

10. Pressstempelmechanismus nach Anspruch 7 oder 8, **dadurch gekennzeichnet, dass** die Führungssäulen (7, 8) zur Führung der Grundplatte (5) sowie der Baugruppe (19) eingerichtet sind.

11. Presstempelbaugruppe nach einem der Ansprüche 1 bis 10, **dadurch gekennzeichnet, dass** die Presskraftbegrenzer (24, 25) durch Zylinder (20, 21) dargestellt sind, deren jeweilige Außenseiten an ihrem einen Ende als Ringkolben ausgebildet sind, dass die Zylinder an ihren anderen Enden mit den Pressstempeln (1, 2) in Verbindung stehen.

12. Presstempelbaugruppe nach Anspruch 11, **dadurch gekennzeichnet, dass** die Kolbenstangen der Zylinder (20, 21) zur Führung von Kühlluft zu den Presstempeln (1, 2) eingerichtet sind.

13. Pressstempelbaugruppe nach einem der Ansprüche 7 bis 12, **dadurch gekennzeichnet, dass** an der Grundplatte (5) ein zur Aufnahme von Kühlluft bestimmter Abluftblock (47) angebracht ist, der mit einem als Sammelleitung fungierenden Abluftrohr (48) in Verbindung steht.

14. Presstempelbaugruppe nach einem der Ansprüche 1 bis 13, **dadurch gekennzeichnet, dass** jeder Pressstempel (1, 2) zur Wegerfassung mit einem Messelement (38) in Verbindung steht, welches zum berührungslosen Zusammenwirken mit einem gehäusefest angeordneten Wegmesssystem (36, 37) eingerichtet ist.

15. Presstempelbaugruppe nach Anspruch 14, **dadurch gekennzeichnet, dass** die Elementenpaarung Messelement/Wegmesssystem ein magnetisches System ist.

16. Presstempelbaugruppe nach einem der vorangegangenen Ansprüche 1 bis 15, **dadurch gekennzeichnet, dass** eine zumindest die Presstempel (1, 2) nebst diesen zugeordneten Antriebselementen umfassende Baueinheit innerhalb des Gehäuses (6) relativ zu diesem in einer Horizontalebene verstellbar angeordnet ist.

17. Presstempelbaugruppe nach Anspruch 16, **dadurch gekennzeichnet, dass** der Baueinheit für eine Verstellung in der Horizontalebene zwei voneinander getrennte Antriebe zugeordnet sind, die an dem Gehäuse (6) befestigt sind.

18. Presstempelbaugruppe nach Anspruch 16 oder 17, **dadurch gekennzeichnet, dass** die Baueinheit mit dem jeweiligen Antrieb über eine Spindel (53, 56) in Wirkverbindung steht.

19. Presstempelbaugruppe nach einem der Ansprüche 16 bis 18, **dadurch gekennzeichnet, dass** die Baueinheit relativ zu dem Gehäuse (6) in der Horizontalebene fixierbar angeordnet ist.

20. Presstempelbaugruppe nach einem der Ansprüche 16 bis 19, **dadurch gekennzeichnet, dass** den Verschiebungen der Baueinheit in der Horizontalebene wegbegrenzend wirkende Anschlagkanten (57, 58) zugeordnet sind.

## Claims

1. Extrusion die assembly for an I.S glassware forming machine, comprising a housing (6), at least two extrusion dies (1, 2) which are arranged movably for performing a shaping process, a drive (17) which is operatively connected to a drive spindle (12) for generating the pressing force to be transmitted to the extrusion dies (1, 2), and comprising pressing force limiters (24, 25) formed by piston-cylinder units, **characterised in that** the drive spindle (12) is mounted in the housing (6) so as to be axially non-displaceable and so as to be rotatable about its axis, **in that** the pressing force limiters (24, 25) are combined in one assembly (19) which is guided vertically and non-rotatably along guide pillars (7, 8), **in that** the assembly (19) is connected to a spindle nut housing (18), which is engaged with the drive spindle (12), for transmitting only pressing forces, and **in that** the spindle nut housing (18) is connected to the housing (6) via lateral linear guides (33, 34), in so doing establishing a transverse force-free operation of the drive spindle (12).

2. Extrusion die mechanism as claimed in claim 1, **characterised in that** the drive spindle (12) is mounted at its upper end (14) in an intermediate base (30) and is mounted at its lower end (15) in a base plate (27) of the housing (6).

3. Extrusion die mechanism as claimed in claim 1 or 2, **characterised in that** the guide pillars (7, 8) are arranged fixed to the housing.

4. Extrusion die assembly as claimed in any one of claims 1 to 3, **characterised in that** the connection between the assembly (19) and the spindle nut housing (18) is established with the proviso that any reaction forces arising from the shaping procedure with the exception of the pressing force are transmitted to the guide pillars (7, 8) and the linear guides (33, 34).

5. Extrusion die assembly as claimed in any one of claims 1 to 4, **characterised in that** the drive (17) is fastened to the housing (6).

6. Extrusion die assembly as claimed in claim 5, **characterised in that** the drive (17) is connected to the drive spindle (12) by means of a gearing mechanism, in particular an angular gear (16).

7. Extrusion die assembly as claimed in any one of claims 1 to 6, **characterised in that** the extrusion dies (1, 2) are received and centred in bushings (3, 4), **in that** the bushings (3, 4) are fastened on a base plate (5) and **in that** the base plate (5) is arranged in a height-adjustable manner relative to the housing (6) for the purpose of adapting to different dimensions of the hollow glass articles to be formed.

8. Extrusion die assembly as claimed in claim 7, **characterised in that** the base plate (5) is connected to a drive (9), which is configured for the height adjustment, by means of at least two mutually parallel spindles (41, 42).

9. Extrusion die assembly as claimed in claim 8, **characterised in that** the two spindles (41, 42) are connected to the drive (9) by means of spindle-type lifting gears (39, 40) and a coupling shaft (26) and **in that** the drive (9) is fastened to the housing (6).

10. Extrusion die mechanism as claimed in claim 7 or 8, **characterised in that** the guide pillars (7, 8) are configured for guiding the base plate (5) and the assembly (19).

11. Extrusion die assembly as claimed in any one of claims 1 to 10, **characterised in that** the pressing force limiters (24, 25) are formed by cylinders (20, 21), of which the respective outer sides are formed at one of their ends as annular pistons, **in that** the cylinders are connected at their other ends to the extrusion dies (1, 2).

12. Extrusion die assembly as claimed in claim 11, **characterised in that** the piston rods of the cylinders (20, 21) are configured for guiding cooling air to the extrusion dies (1, 2).

13. Extrusion die assembly as claimed in any one of claims 7 to 12, **characterised in that** an exhaust air block (47) which is intended to receive cooling air and is connected to an exhaust air tube (48) functioning as a collector line is attached to the base plate (5).

14. Extrusion die assembly as claimed in any one of claims 1 to 13, **characterised in that**, for the purpose of path detection, each extrusion die (1, 2) is connected to a measuring element (38) which is configured for contactless interaction with a path measuring system (36, 37) arranged fixed to the housing.

15. Extrusion die assembly as claimed in claim 14, **characterised in that** the element pairing of measuring element/path measuring system is a magnetic system.

16. Extrusion die assembly as claimed in any one of the preceding claims 1 to 15, **characterised in that** a construction unit which comprises at least the extrusion dies (1, 2) together with drive elements allocated thereto is arranged within the housing (6) so as to be adjustable relative thereto in a horizontal plane.

17. Extrusion die assembly as claimed in claim 16, **characterised in that** the construction unit for an adjustment in the horizontal plane is allocated two mutually separate drives which are fastened to the housing (6).

18. Extrusion die assembly as claimed in claim 16 or 17, **characterised in that** the construction unit is operatively connected to the respective drive by means of a spindle (53, 56).

19. Extrusion die assembly as claimed in any one of claims 16 to 18, **characterised in that** the construction unit is arranged so as to be fixable relative to the housing (6) in the horizontal plane.

20. Extrusion die assembly as claimed in any one of claims 16 to 19, **characterised in that** stop edges (57, 58) which act in a path-limiting manner are associated with the displacements of the construction unit in the horizontal plane.

## Revendications

1. Module de poinçon pour une machine à former le verre à compartiment individuel avec un boîtier (6), au moins deux poinçons (1, 2) disposés de manière mobile pour mettre en œuvre un processus de façonnage, un entraînement (17), qui est en liaison fonctionnelle avec une broche d'entraînement (12) pour générer la force de compression à transmettre au poinçon (1, 2), et avec des limiteurs de force de compression (24, 25) constitués par des unités pistons-cylindres, **caractérisé en ce que** la broche d'entraînement (12) est montée sans pouvoir coulisser axialement dans le boîtier (6) et de manière à pouvoir tourner autour de son axe, que les limiteurs de force de compression (24, 25) sont regroupés en un module (19), qui est guidé de manière verticale et sans pouvoir vriller le long de colonnes de guidage (7, 8), que le module (19) est relié à un boîtier d'écrou de broche (18) en prise avec la broche d'entraînement (12) pour transmettre seulement des forces de compression, et que le boîtier d'écrou de broche (18) est relié au boîtier (6) par l'intermédiaire de guidages linéaires (33, 34) latéraux, mettant en place ce faisant un fonctionnement sans force transversale de la broche d'entraînement (12).

2. Mécanisme de poinçon selon la revendication 1, **caractérisé en ce que** la broche d'entraînement (12) est montée au niveau de son extrémité supérieure (14) dans un fond intermédiaire (30) et au niveau de son extrémité inférieure (15) dans une plaque de fond (27) du boîtier (6).

3. Mécanisme de poinçon selon la revendication 1 ou 2, **caractérisé en ce que** les colonnes de guidage (7, 8) sont disposées de manière solidaire du boîtier.

4. Module de poinçon selon l'une quelconque des revendications 1 à 3, **caractérisé en ce que** la liaison entre le module (19) et le boîtier d'écrou de broche (18) est mise au point à condition que toutes les forces réactionnelles issues de l'opération de façonnage à l'exception de la force de compression soient transmises sur les colonnes de guidage (7, 8) ainsi que sur les guidages linéaires (33, 34).

5. Module de poinçon selon l'une quelconque des revendications 1 à 4, **caractérisé en ce que** l'entraînement (17) est fixé au niveau du boîtier (6).

6. Module de poinçon selon la revendication 5, **caractérisé en ce que** l'entraînement (17) est relié à la broche d'entraînement (12) par l'intermédiaire d'un engrenage, en particulier d'un engrenage angulaire (16).

7. Module de poinçon selon l'une quelconque des revendications 1 à 6, **caractérisé en ce que** les poinçons (1, 2) sont reçus et centrés dans des chemises (3, 4), que les chemises (3, 4) sont fixées sur une plaque de base (5), et que la plaque de base (5) est disposée de manière ajustable en hauteur par rapport au boîtier (6) aux fins de l'adaptation à des mesures différentes des articles en verre creux à former.

8. Module de poinçon selon la revendication 7, **caractérisé en ce que** la plaque de base (5) est reliée à un entraînement (9) mis au point en vue du réglage en hauteur par l'intermédiaire d'au moins deux broches (41, 42) parallèles à l'autre.

9. Module de poinçon selon la revendication 8, **caractérisé en ce que** les deux broches (41, 42) sont reliées à l'entraînement (9) par l'intermédiaire d'engrenages de levage à broche (39, 40) et d'un arbre de couplage (26), et que l'entraînement (9) est fixé au niveau du boîtier (6).

10. Mécanisme de poinçon selon la revendication 7 ou 8, **caractérisé en ce que** les colonnes de guidage (7, 8) sont mises au point pour guider la plaque de base (5) ainsi que le module (19).

11. Module de poinçon selon l'une quelconque des revendications 1 à 10, **caractérisé en ce que** les limiteurs de force de compression (24, 25) sont constitués par des cylindres (20, 21), dont les côtés extérieurs respectifs sont réalisés au niveau d'une extrémité en tant que pistons annulaires, que les cylindres sont reliés au niveau de leurs autres extrémités aux poinçons (1, 2).

12. Module de poinçon selon la revendication 11, **caractérisé en ce que** les tiges de piston des cylindres (20, 21) sont mises au point pour guider de l'air de refroidissement vers les poinçons (1, 2).

13. Module de poinçon selon l'une quelconque des revendications 7 à 12, **caractérisé en ce qu'**est installé au niveau de la plaque de base (5) un bloc d'air vicié (47) se destinant à recevoir de l'air de refroidissement, qui est relié à un tuyau d'air vicié (48) faisant office de conduit de collecte.

14. Module de poinçon selon l'une quelconque des revendications 1 à 13, **caractérisé en ce que** chaque poinçon (1, 2) est relié à un élément de mesure (38) aux fins de la détection de course, lequel est mis au point pour coopérer sans contact avec un système de mesure de course (36, 37) disposé de manière solidaire du boîtier.

15. Module de poinçon selon la revendication 14, **caractérisé en ce que** la paire d'éléments élément de mesure/système de mesure de course est un système magnétique.

16. Module de poinçon selon l'une quelconque des revendications précédentes 1 à 15, **caractérisé en ce qu'**une unité modulaire comprenant au moins le poinçon (1, 2) en plus desdits éléments d'entraînement associés est disposée à l'intérieur du boîtier (6) de manière ajustable par rapport à celui-ci dans un plan horizontal.

17. Module de poinçon selon la revendication 16, **caractérisé en ce que** deux entraînements séparés l'un de l'autre, qui sont fixés au niveau du boîtier (6), sont associés à l'unité modulaire en vue d'un ajustement dans le plan horizontal.

18. Module de poinçon selon la revendication 16 ou 17, **caractérisé en ce que** l'unité modulaire est en liaison fonctionnelle avec l'entraînement respectif par l'intermédiaire d'une broche (53, 56).

19. Module de poinçon selon l'une quelconque des revendications 16 à 18, **caractérisé en ce que** l'unité modulaire est disposée de manière à pouvoir être bloquée dans le plan horizontal par rapport au boîtier (6) .

20. Module de poinçon selon l'une quelconque des revendications 16 à 19, **caractérisé en ce que** des arêtes de butée (57, 58) agissant de manière à limiter la course sont associées aux coulissements de l'unité modulaire dans le plan horizontal.
